(19) **Europäisches Patentamt / European Patent Office / Office européen des brevets**

(11) **EP 2 558 700 B1**

(12) **FASCICULE DE BREVET EUROPEEN**

(45) Date de publication et mention de la délivrance du brevet:
**07.06.2017 Bulletin 2017/23**

(21) Numéro de dépôt: **11731007.8**

(22) Date de dépôt: **12.04.2011**

(51) Int Cl.:
*F02C 9/26* *(2006.01)*     *F02C 7/232* *(2006.01)*

(86) Numéro de dépôt international:
**PCT/FR2011/050830**

(87) Numéro de publication internationale:
**WO 2011/128573 (20.10.2011 Gazette 2011/42)**

(54) **PROCEDE ET DISPOSITIF D'ELABORATION D'UN SIGNAL DE CONSIGNE**

VERFAHREN UND VORRICHTUNG ZUR FORMULIERUNG EINES SOLLWERTSIGNALS

METHOD AND DEVICE FOR FORMULATING A SETPOINT SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.04.2010 FR 1052882**

(43) Date de publication de la demande:
**20.02.2013 Bulletin 2013/08**

(73) Titulaire: **Snecma**
**75015 Paris (FR)**

(72) Inventeurs:
• **GAULLY, Bruno, Robert**
  **F-91630 Marolles en Hurepoix (FR)**
• **RIOU, Alexandra**
  **F-22620 Loguivy De La Mer (FR)**
• **DJELASSI, Cedrik**
  **F-91630 Marolles en Hurepoix (FR)**

(74) Mandataire: **Boura, Olivier et al**
**Cabinet Beau de Loménie**
**158, rue de l'Université**
**75340 Paris Cedex 07 (FR)**

(56) Documents cités:
**EP-A2- 1 510 795     US-A- 5 305 597**

EP 2 558 700 B1

**Description**

Arrière-plan de l'invention

La présente invention se rapporte au domaine général des turbomachines. Elle s'applique de façon privilégiée mais non limitative au domaine de l'aéronautique.

L'invention concerne plus particulièrement un procédé et un dispositif d'élaboration d'un signal de consigne destiné à être utilisé dans une boucle d'asservissement d'un dispositif de dosage de carburant d'une turbomachine, telle qu'un turboréacteur. Ce signal de consigne est typiquement un signal représentatif d'un débit de carburant massique devant être fourni par le dispositif de dosage à un système d'injection de carburant d'une chambre de combustion de la turbomachine.

De façon connue, le dispositif de dosage de carburant d'une turbomachine est muni d'un tiroir, aussi appelé vanne de dosage (FMV pour Fuel Metering Valve), dont la position est proportionnelle au débit de carburant devant être injecté dans la chambre de combustion, lorsque la différence de pression de part et d'autre du tiroir est maintenue constante.

Une estimation du débit massique de carburant devant être injecté dans la chambre de combustion est évaluée par le calculateur de la turbomachine et fournie au dispositif de dosage sous la forme d'un signal de consigne. Une technique classiquement utilisée pour identifier la position du tiroir à partir de l'estimation du débit massique fournie par le calculateur est la suivante.

En se déplaçant, le tiroir obstrue plus ou moins une section S de passage du carburant dans le dispositif de dosage. La section S est aussi appelée surface d'ouverture du dispositif de dosage et s'exprime aisément en fonction de la position du tiroir.

De façon connue, cette surface S est proportionnelle au débit volumique de carburant. Celui-ci est obtenu en divisant le signal de consigne en débit massique fourni par le calculateur par la densité volumique du carburant circulant dans le dispositif de dosage.

La densité volumique du carburant est généralement supposée constante tout au long de la mission de la turbomachine, et prédéterminée.

Or, cette hypothèse ne tient pas compte d'un changement possible de la nature du carburant utilisé ou d'une variation de la température du carburant lors du fonctionnement de la turbomachine. Elle induit de ce fait des imprécisions dans l'évaluation de la position du tiroir du dispositif de dosage.

Il existe donc un besoin de disposer d'une technique permettant d'estimer précisément le dosage de carburant d'une turbomachine ne souffrant pas des inconvénients précités, et notamment d'élaborer un signal de consigne précis pour asservir le dispositif de dosage.

Le document US 5,305,597 propose une méthode d'élaboration d'un signal de consigne d'un dispositif de dosage de carburant utilisant une mesure, délivrée par un débitmètre, du débit injecté dans la chambre de combustion. Cette mesure est utilisée pour estimer un signal de calibration proportionnel à la densité volumique instantanée du carburant.

Ce signal de calibration sert à ajuster le signal de consigne de débit massique évalué à partir de la position du tiroir du dispositif de dosage. Il est mis à jour lorsque l'on détermine, selon un critère prédéfini, que la mesure délivrée par le débitmètre est suffisamment précise, c'est-à-dire typiquement, lorsque le débit mesuré est assez important et varie peu. Le document EP1150795 propose également une méthode alternative pour l'élaboration d'un signal de consigne d'un dispositif de dosage de carburant.

Objet et résumé de l'invention

La présente invention propose une méthode alternative à la méthode décrite dans le document US 5,305,597, permettant d'améliorer la précision du dosage de carburant d'une turbomachine.

Selon un premier aspect, l'invention vise un procédé d'élaboration d'un signal de consigne représentatif d'un débit de carburant devant être fourni par un dispositif de dosage de carburant à tiroir à un système d'injection de carburant d'une chambre de combustion d'une turbomachine, la position du tiroir du dispositif de dosage étant déterminée à partir du signal de consigne, ledit procédé comprenant :

- une étape d'obtention d'un premier signal représentatif d'une mesure, délivrée par un débitmètre, d'un débit de carburant injecté dans la chambre de combustion ;
- une étape d'évaluation d'un deuxième signal représentatif du débit de carburant injecté dans la chambre de combustion, à partir d'une mesure de la position du tiroir du dispositif de dosage ;
- une étape d'estimation d'un troisième signal représentatif de la mesure délivrée par le débitmètre en appliquant un modèle numérique du débitmètre sur le deuxième signal ; et
- une étape d'élaboration du signal de consigne en ajoutant au premier signal un signal de compensation, ce signal de compensation étant obtenu par soustraction du troisième signal au deuxième signal.

Corrélativement, l'invention vise également un dispositif d'élaboration d'un signal de consigne représentatif d'un débit de carburant devant être fourni par un dispositif de dosage de carburant à tiroir à un système d'injection de carburant d'une chambre de combustion d'une turbomachine, la position du tiroir du dispositif de dosage étant déterminée à partir du signal de consigne, ledit dispositif comprenant :

- des moyens d'obtention d'un premier signal représentatif d'une mesure, délivrée par un débitmètre, d'un débit de carburant injecté dans la chambre de combustion ;

- des moyens d'évaluation d'un deuxième signal représentatif du débit de carburant injecté dans la chambre de combustion à partir d'une mesure de la position du tiroir du dispositif de dosage ;
- des moyens d'estimation d'un troisième signal représentatif de la mesure délivrée par le débitmètre en appliquant un modèle numérique du débitmètre sur le deuxième signal ; et
- des moyens d'élaboration du signal de consigne en ajoutant au premier signal un signal de compensation, ce signal de compensation étant obtenu par soustraction du troisième signal au deuxième signal.

L'invention propose ainsi de combiner deux signaux pour améliorer la précision du dosage du carburant d'une turbomachine, à savoir d'une part un signal élaboré à partir de la position du tiroir du dispositif de dosage (i.e. signal utilisé classiquement pour la régulation du débit de carburant) et d'autre part un signal délivré par un débitmètre apte à mesurer le débit de carburant injecté dans la chambre de combustion. Ce débitmètre est par exemple un débitmètre massique aussi connu sous le nom de WFM (Weight Flow Meter) tel qu'un couple mètre ou un débitmètre volumique, connus en soi. On choisira de préférence un débitmètre capable de mesurer précisément la valeur absolue (i.e. valeur exacte) du débit de carburant le traversant, afin de compenser le manque de précision en valeur absolue du signal obtenu à partir de la position du tiroir du dispositif de dosage.

On notera en revanche qu'il n'est pas nécessaire que le débitmètre dispose d'une constante de temps faible. De façon connue en soi, la constante de temps d'un capteur caractérise son temps de réponse, c'est-à-dire son inertie. Cette inertie se traduit par un décalage temporel entre le moment où la mesure est réalisée par le capteur et le moment où celui-ci délivre un signal en réponse à cette mesure.

En effet, le signal obtenu à partir de la position du tiroir du dispositif de dosage étant précis en valeurs relatives (i.e. il offre une représentation précise de la dynamique d'évolution du débit de carburant dans le temps), il permet avantageusement de compenser l'inertie du débitmètre.

L'invention permet ainsi de combiner les caractéristiques avantageuses des mesures issues du débitmètre et du dispositif de dosage.

Le débitmètre sera placé préférentiellement à proximité du tiroir du dispositif de dosage, en série avec celui-ci, de sorte que le débit de carburant traversant le tiroir du dispositif de dosage et le débit de carburant traversant le débitmètre soient sensiblement à la même température. On améliore ainsi la précision du signal de consigne élaboré selon l'invention.

En variante, la différence de température pourra être intégrée dans le modèle numérique du débitmètre utilisé pour estimer le troisième signal.

L'utilisation du débitmètre conformément à l'invention introduit une redondance par rapport à la mesure réalisée par le dispositif de dosage, ce qui permet d'améliorer la précision du signal de consigne. Les contraintes en termes de précision du dispositif de dosage peuvent de ce fait être relâchées, conduisant ainsi à une réduction des coûts associés aux équipements embarqués dans la turbomachine.

L'amélioration de la précision du signal de consigne, et de ce fait du dosage du carburant injecté dans la chambre de combustion, présente divers avantages non négligeables. Pour un turboréacteur, ces avantages sont notamment :

- une conception du compresseur haute pression facilitée ;
- une augmentation de la durée de vie du compresseur haute pression, et par ce biais de la plage d'utilisation du turboréacteur au regard des limites de pompage et d'extinction ;
- une utilisation du débitmètre pour la détection de perturbations en sortie du dispositif de dosage lié aux géométries variables non détectables par le dispositif de dosage ;
- un relâchement des contraintes de certification du dispositif de dosage ;
- une amélioration du rendement du compresseur haute pression ;
- etc.

Dans un mode particulier de réalisation de l'invention :

- le premier signal présente des créneaux, et est filtré par un filtre numérique passe-bas apte à lisser ces créneaux avant d'être ajouté au signal de compensation ; et
- le troisième signal est filtré par le filtre numérique passe-bas avant d'être soustrait au deuxième signal pour former le signal de compensation.

Corrélativement, dans ce mode de réalisation, le premier signal présente des créneaux, et le dispositif d'élaboration comporte en outre un premier filtre numérique passe-bas apte à lisser les créneaux du premier signal et un second filtre numérique similaire au premier filtre, le premier signal étant filtré par le premier filtre avant d'être ajouté au signal de compensation et le troisième signal étant filtré par le second filtre avant d'être soustrait au deuxième signal pour former le signal de compensation.

L'invention permet ainsi de prendre en compte les particularités du débitmètre et notamment les caractéristiques du signal délivré par celui-ci, à savoir ici, sa forme en créneaux. Un couple-mètre est un exemple de débitmètre délivrant des signaux en créneaux.

L'invention s'applique toutefois à d'autres types de signaux (et donc de débitmètres), moyennant l'utilisation d'un filtre numérique adapté à la forme de ces signaux. L'adaptation du filtre numérique à la forme des signaux ne présente en soi aucune difficulté pour l'homme du métier.

On choisira la constante de temps du premier filtre numérique suffisamment élevée pour permettre le lissage des créneaux tout en limitant les oscillations du signal résultant en sortie de filtrage. Le retard introduit par le premier filtre du fait de ce choix est compensé par l'invention en filtrant par un filtre similaire au premier filtre le troisième signal avant de le soustraire au deuxième signal pour former le signal de compensation.

Selon un deuxième aspect, l'invention vise un procédé de fourniture d'un signal de consigne à un dispositif de dosage de carburant à tiroir d'une turbomachine, la position du tiroir du dispositif de dosage étant déterminée à partir du signal de consigne, ce procédé comprenant :

- une étape d'élaboration d'un premier signal de consigne en utilisant un procédé d'élaboration conforme à l'invention ;
- si ce premier signal de consigne est supérieur à un seuil prédéterminé, une étape de fourniture du premier signal de consigne au dispositif de dosage de carburant ;
- sinon, une étape de fourniture au dispositif de dosage de carburant, d'un second signal de consigne obtenu à partir au moins du deuxième signal.

Corrélativement, l'invention vise également un système de fourniture d'un signal de consigne à un dispositif de dosage de carburant à tiroir d'une turbomachine, la position du tiroir du dispositif de dosage étant déterminée à partir du signal de consigne, ledit système comprenant :

- un dispositif d'élaboration d'un premier signal de consigne conforme à l'invention ;
- des moyens de comparaison du premier signal de consigne avec un seuil prédéterminé ;
- des moyens de fourniture au dispositif de dosage de carburant :

  ∘ du premier signal de consigne si celui-ci est supérieur au seuil prédéterminé ;
  o d'un second signal de consigne obtenu à partir au moins du deuxième signal, sinon.

L'invention permet ainsi de compenser l'imprécision du débitmètre lorsque des débits de carburant trop faibles le traversent, en basculant sur un signal de consigne élaboré à partir notamment de la position du tiroir du dispositif de dosage.

A titre d'exemple, lorsque le premier signal de consigne est inférieur au seuil prédéterminé, le deuxième signal de consigne fourni au dispositif de dosage de carburant pourra résulter d'une combinaison du deuxième signal et du premier signal de consigne.

Cette combinaison pourra être notamment une combinaison linéaire ou une combinaison plus complexe basée sur un polynôme. Préférentiellement, on choisira une combinaison permettant une transition progressive entre le deuxième signal de consigne et le premier signal de consigne en vue d'éviter un phénomène de pompage de la turbomachine, connu en soi.

Selon un troisième aspect, l'invention vise également une turbomachine comprenant un système de fourniture d'un signal de consigne à un dispositif de dosage de carburant à tiroir conforme à l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

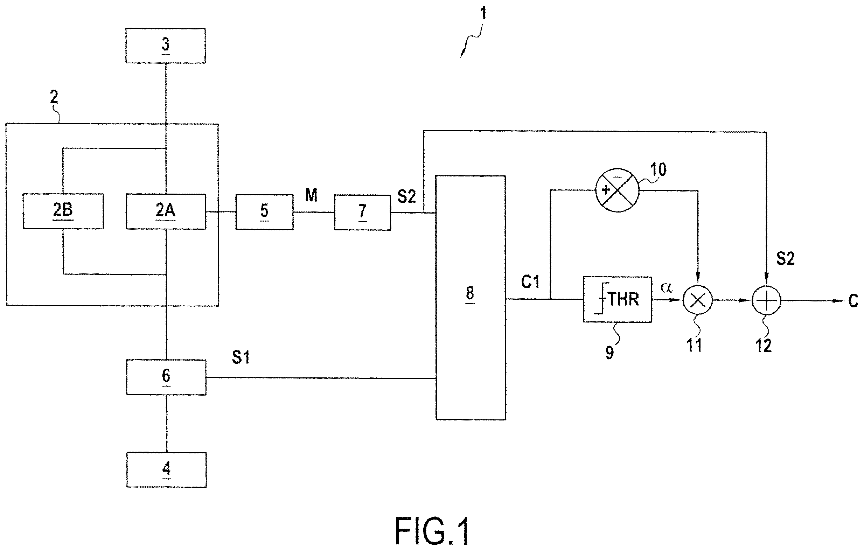

- la figure 1 représente, de façon schématique, un système de fourniture d'un signal de consigne à un dispositif de dosage carburant d'une turbomachine conforme à l'invention, ainsi que les principales étapes d'un procédé de fourniture d'un signal de consigne conforme à l'invention, dans un mode particulier de réalisation ;

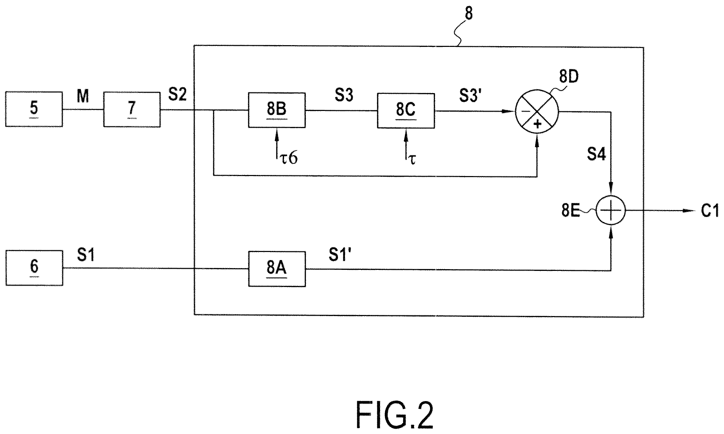

- la figure 2 représente un dispositif d'élaboration d'un signal de consigne conforme à l'invention, dans un mode particulier de réalisation dans lequel il est intégré au système de fourniture représenté sur la figure 1, ainsi que les principales étapes d'un procédé d'élaboration d'un signal de consigne conforme à l'invention ; et

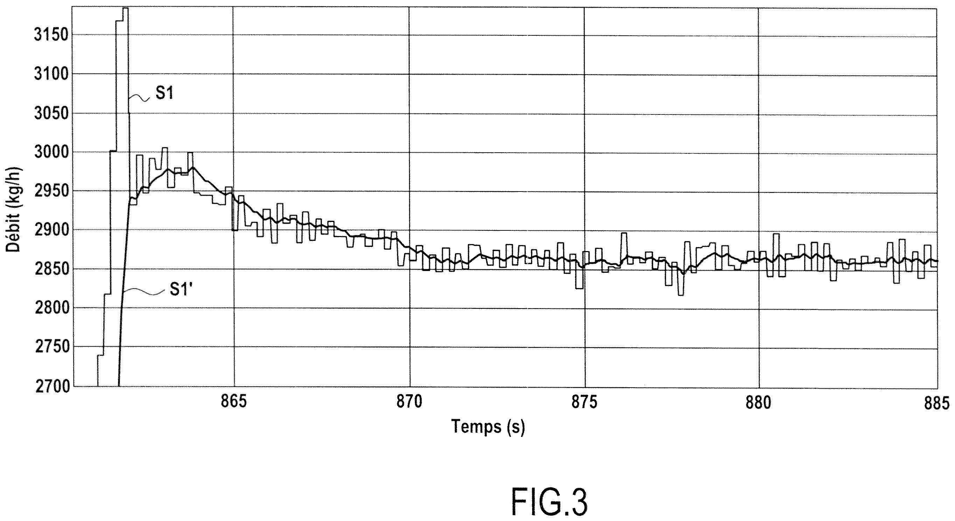

- la figure 3 représente un exemple de signal délivré par un débitmètre tel que celui utilisé dans le dispositif d'élaboration de la figure 2, ainsi que le signal obtenu après filtrage.

Description détaillée d'un mode de réalisation

La **figure 1** représente, dans son environnement, un système 1 de fourniture d'un signal de consigne, à un dispositif 2 de dosage de carburant d'un turboréacteur propulsant un avion (non représenté), conforme à l'invention, dans un mode particulier de réalisation.

Cette hypothèse n'est toutefois pas limitative, l'invention s'appliquant également à d'autres turbomachines telles que par exemple à un turbopropulseur, ainsi qu'à d'autres types d'aéronef.

De façon connue en soi, le dispositif 2 de dosage de carburant, aussi communément appelé « doseur », permet de régler la quantité de carburant venant du circuit carburant 3 de l'avion, fournie par le système d'injection de carburant 4 de la chambre de combustion du turboréacteur (non représentée).

A cette fin, le doseur 2 est muni d'un tiroir 2A ou vanne de dosage (FMV pour Fuel Metering Valve en anglais), dont la position varie en fonction du débit de carburant devant être injecté dans la chambre de combustion. En se déplaçant, le tiroir vient obstruer une section de passage du carburant, notée S, aussi appelée surface d'ouverture du dispositif de dosage. On notera que la relation entre la surface S et la position du tiroir est connue en soi et ne sera pas détaillée davantage ici.

La surface S est proportionnelle au débit volumique Qv de carburant injecté dans la chambre de combustion, i.e. :

$$Qv = KS\sqrt{\Delta P}$$

où K désigne une constante et $\Delta P$ la différence de pression dans le doseur 2 existant de part et d'autre du tiroir 2A. Cette différence de pression est maintenue constante grâce à une soupape régulatrice 2B, connue en soi.

Le débit volumique Qv est obtenu en divisant le débit massique Qm par la densité volumique $\rho$ du carburant circulant dans le dispositif de dosage. La densité volumique $\rho$ est supposée ici constante.

Le débit massique Qm est transmis par le système 1 au doseur 2 sous la forme d'un signal de consigne C, via une boucle d'asservissement (non représentée). Le système 1 est intégré ici au calculateur du turboréacteur.

Conformément à l'invention, pour évaluer le signal de consigne C à fournir au doseur, le système de fourniture 1 procède en deux temps.

Dans un premier temps, il évalue, à chaque instant d'échantillonnage, un premier signal de consigne C1 à l'aide d'une part, d'une mesure M de la position du tiroir 2A délivré par un capteur de position 5, et d'autre part d'un signal de mesure S1 du débit de carburant injecté dans la chambre de combustion délivré par un débitmètre massique 6.

Le capteur de position 5 est par exemple un capteur LVDT (Linear Variable Differential Transformer), connu de l'homme du métier. La mesure M est alors transformée par un convertisseur 7, également connu, en un signal S2 représentatif d'un débit massique.

Les signaux S1 et S2 constituent respectivement un premier signal et un deuxième signal au sens de l'invention.

Le débitmètre massique 6 (ou WFM) a une constante de temps notée $\tau 6$. Il est placé ici en série par rapport au doseur 2, à proximité immédiate de celui-ci. De cette sorte, la température du carburant est sensiblement la même lorsqu'il traverse le doseur 2 et le débitmètre 6. Un débitmètre massique étant un équipement connu de l'homme du métier, son fonctionnement ne sera pas décrit plus en détails ici.

Le signal de consigne C1 est élaboré à partir des signaux S1 et S2 par un dispositif d'élaboration 8 du système 1, conforme à l'invention et décrit plus en détails ultérieurement en référence à la figure 2.

Dans un second temps, le système 1 détermine si le signal de consigne C1 est suffisamment précis pour être envoyé au doseur 2 via la boucle d'asservissement. En effet, en deçà d'un certain débit, en raison de son inertie, le débitmètre massique 6 est moins précis que le dispositif de dosage 2 pour évaluer le débit injecté dans la chambre de combustion.

Ainsi, le signal de consigne C1 est comparé à un seuil THR par un comparateur 9 connu en soi. Le comparateur 9 émet ici un signal noté $\alpha$ au niveau haut (« 1 » numérique) si le signal C1 est supérieur au seuil THR, et un signal au niveau bas (« 0 » numérique) sinon.

Ce comparateur est destiné à détecter des débits de carburant faibles pour lesquels la précision du débitmètre 5 est insuffisante et ne permet pas d'obtenir une mesure fiable du débit massique injecté dans la chambre de combustion 4. Le seuil THR est prédéterminé (par exemple THR = 450 kg/h), et choisi en fonction de la précision et de la constante de temps du débitmètre 6.

Dans l'exemple envisagé ici, si le signal $\alpha$ est égal à 1, le système 1 fournit au doseur comme signal de consigne C, le signal C1 évalué par le dispositif 8. En revanche, si le signal $\alpha$ est égal à 0, le système 1 fournit comme signal de consigne C le signal S2 délivré par le capteur de position 5 et le convertisseur 7.

Cette opération est assurée ici par l'intermédiaire :

- d'un élément soustracteur 10, adapté à soustraire le signal S2 au signal C1 ;
- d'un élément multiplicateur 11, adapté à multiplier le signal issu de l'élément soustracteur par le signal $\alpha$ ; et
- d'un élément additionneur 12, adapté à additionner le signal S2 au signal issu de l'élément multiplicateur 11.

On notera que dans l'exemple envisagé ici, le signal de consigne C fourni par le système 1 est soit le signal de consigne C1 élaboré par le dispositif 8, soit le signal S2. En variante, une combinaison des signaux S2 et C1 peut être fournie comme signal de consigne C au doseur 2 par le système 1.

Il peut s'agir notamment d'une combinaison linéaire des signaux C1 et S2. Pour ce faire, le comparateur 9 peut par exemple délivrer un signal $\alpha$ réel, dont la valeur dépend de la différence entre le signal C1 et le seuil THR. De cette sorte on atteint une transition progressive du signal S2 issu du convertisseur 7 vers le signal C1 élaboré par le dispositif 8, à mesure que le débit de carburant injecté dans la chambre de combustion augmente.

En variante, d'autres dispositifs peuvent être utilisés pour pondérer la combinaison des signaux C1 et S2, comme par exemple un filtre d'ordre supérieur à 1.

Nous allons maintenant décrire, en référence à la **figure 2**, les principales étapes mises en oeuvre par le dispositif 8 et conduisant à l'élaboration du signal de consigne C1.

Comme mentionné précédemment, conformément à l'invention, le dispositif 8 utilise pour élaborer le signal de consigne C1 d'une part le signal S1 délivré par le débitmètre, et d'autre part le signal S2 délivré par le convertisseur 7 et évalué à partir de la position M du tiroir 2A.

Le signal S1 délivré par le débitmètre 6 a ici une forme en créneaux, comme illustré à titre indicatif sur la **figure 3**.

Pour permettre son exploitation dans l'élaboration du signal de consigne C1, le signal S1 est filtré par un filtre numérique passe-bas 8A, adapté à lisser le signal S1, autrement dit à supprimer les créneaux. Sa constante de temps $\tau$ est choisie à cette fin suffisamment élevée. Elle est déterminée de façon expérimentale : on choisira la plus petite constante de temps permettant d'obtenir un signal lissé après filtrage (préférentiellement inférieure à 1000s). On notera qu'une constante de temps trop élevée, bien que n'ayant aucune influence sur la stabilité du système, pourra fausser la valeur du signal de consigne C1 en le faisant converger vers la valeur du signal S2.

On note S1' le signal obtenu en sortie du filtre 8A.

La figure 3 illustre à titre indicatif le signal S1' obtenu après filtrage du signal S1 représenté sur cette même figure, à l'aide d'un filtre numérique passe-bas choisi de sorte à supprimer les créneaux du signal S1.

En parallèle du traitement appliqué au signal S1, le signal S2 est fourni en entrée d'un module de modélisation numérique 8B. Le module 8B est adapté à modéliser le débit de carburant théoriquement mesuré par le débitmètre 6 lorsqu'un débit de carburant caractérisé par le signal S2 le traverse. On note S3 le signal modélisé par le module 8B et représentatif du débit de carburant mesuré par le débitmètre 6.

Le module 8B s'appuie sur un modèle numérique des éléments mécaniques du débitmètre 6 et prend en compte notamment sa constante de temps $\tau6$. La constante de temps $\tau6$ est supposée ici constante, égale à la constante de temps fournie par le fabricant du débitmètre. On notera qu'un tel modèle numérique est connu en soi et ne sera pas décrit plus en détails ici.

Le module 8B modélisant le débitmètre 6, il s'ensuit que le signal modélisé S3 est aussi, de façon similaire au signal S1, un signal en créneaux.

Il est donc fourni à un filtre numérique passe-bas 8C, similaire au filtre numérique 8A (et notamment de même constante de temps $\tau$) afin d'être lissé. Dans l'exemple décrit ici, les filtres 8A et 8C sont identiques.

Le signal S3' lissé obtenu en sortie du filtre 8C est alors fourni à un élément soustracteur 8D, adapté à soustraire le signal S3' au signal S2.

Le signal S4 résultant de cette soustraction est alors ajouté, à l'aide d'un élément additionneur 8E, au signal S1' issu du filtre 8A pour former le signal de consigne C1. Le signal S4 est un signal de compensation au sens de l'invention.

## Revendications

1. Procédé d'élaboration d'un signal de consigne (C1) représentatif d'un débit de carburant devant être fourni par un dispositif de dosage (2) de carburant à tiroir à un système d'injection de carburant (4) d'une chambre de combustion d'une turbomachine, la position du tiroir (2A) du dispositif de dosage étant déterminée à partir du signal de consigne, ledit procédé comprenant :

   - une étape d'obtention d'un premier signal (S1) représentatif d'une mesure, délivrée par un débitmètre (6), d'un débit de carburant injecté dans la chambre de combustion ;
   - une étape d'évaluation d'un deuxième signal (S2) représentatif du débit de carburant injecté dans la chambre de combustion à partir d'une mesure (M) de la position du tiroir (2A) du dispositif de dosage (2) ;
   - une étape d'estimation d'un troisième signal (S3) représentatif de la mesure délivrée par le débitmètre (6) en appliquant un modèle numérique (8B) du débitmètre sur le deuxième signal (S2) ; et
   - une étape d'élaboration du signal de consigne (C1) en ajoutant au premier signal (S1) un signal de compensation (S4), ce signal de compensation étant obtenu par soustraction du troisième signal au deuxième signal.

2. Procédé d'élaboration d'un signal de consigne selon la revendication 1 dans lequel :

   - le premier signal (S1) présente des créneaux, et est filtré par un filtre numérique passe-bas (8A) apte à lisser ces créneaux avant d'être ajouté au signal de compensation (S4) ; et
   - le troisième signal (S3) est filtré par le filtre numérique passe-bas (8C) avant d'être soustrait au deuxième signal pour former le signal de compensation (S4).

3. Procédé de fourniture d'un signal de consigne (C) à un dispositif de dosage (2) de carburant à tiroir d'une turbomachine, la position du tiroir (2A) du dispositif de dosage étant déterminée à partir du signal de consigne, ledit procédé comprenant :

   - une étape d'élaboration d'un premier signal de consigne (C1) en utilisant le procédé d'élaboration selon la revendication 1 ou 2 ;
   - si ce premier signal de consigne (C1) est supérieur à un seuil prédéterminé (THR), une étape de fourniture du premier signal de consigne (C1) au dispositif de dosage (2) de carburant ;
- sinon, une étape de fourniture, au dispositif de dosage (2) de carburant, d'un second signal de consigne obtenu à partir au moins du deuxième signal (S2).

4. Procédé de fourniture selon la revendication 3 dans lequel lorsque le premier signal de consigne (C1) est inférieur au seuil prédéterminé (THR), le second signal de consigne fourni au dispositif de dosage de carburant résulte d'une combinaison entre le deuxième signal (S2) et le premier signal de consigne (C1).

5. Dispositif d'élaboration (8) d'un signal de consigne représentatif d'un débit de carburant devant être fourni par un dispositif de dosage (2) de carburant à tiroir à un système d'injection (4) de carburant d'une chambre de combustion d'une turbomachine, la position du tiroir (2A) du dispositif de dosage étant déterminée à partir du signal de consigne (C), ledit dispositif comprenant :

- des moyens d'obtention d'un premier signal (S1) représentatif d'une mesure, délivrée par un débitmètre, d'un débit de carburant injecté dans la chambre de combustion ;
- des moyens d'évaluation (5,7) d'un deuxième signal (S2) représentatif du débit de carburant injecté dans la chambre de combustion à partir d'une mesure (M) de la position du tiroir (2A) du dispositif de dosage ;
- des moyens d'estimation d'un troisième signal (S3) représentatif de la mesure délivrée par le débitmètre en appliquant un modèle numérique (8B) du débitmètre sur le deuxième signal (S2) ; et
- des moyens d'élaboration (8E) du signal de consigne (C1) en ajoutant au premier signal (S1) un signal de compensation (S4), ce signal de compensation étant obtenu par soustraction du troisième signal (S3) au deuxième signal (S2).

6. Dispositif d'élaboration (8) d'un signal de consigne selon la revendication 5 dans lequel le premier signal (S1) présente des créneaux, ledit dispositif d'élaboration comportant en outre un premier filtre (8A) numérique passe-bas apte à lisser les créneaux du premier signal et un second filtre (8C) numérique similaire au premier filtre, le premier signal étant filtré par le premier filtre avant d'être ajouté au signal de compensation et le troisième signal étant filtré par le second filtre avant d'être soustrait au deuxième signal pour former le signal de compensation.

7. Système de fourniture (1) d'un signal de consigne à un dispositif de dosage (2) de carburant à tiroir d'une turbomachine, la position du tiroir (2A) du dispositif de dosage étant déterminée à partir du signal de consigne, ledit système comprenant :

- un dispositif d'élaboration (8) d'un premier signal de consigne (C1) selon la revendication 5 ou 6 ;
- des moyens de comparaison (9) du premier signal de consigne avec un seuil (THR) prédéterminé ;
- des moyens de fourniture au dispositif de dosage de carburant :

  ◦ du premier signal de consigne (C1) si celui-ci est supérieur au seuil prédéterminé ;
  ◦ d'un second signal de consigne obtenu à partir au moins du deuxième signal (S2).

8. Turbomachine comprenant un système de fourniture (1) d'un signal de consigne à un dispositif de dosage de carburant à tiroir selon la revendication 7.

**Patentansprüche**

1. Verfahren zur Erstellung eines Sollsignals (C1), das für eine Treibstoffmenge, die über eine Treibstoffdosiervorrichtung (2) mit Schieber an ein Treibstoffeinspritzsystem (4) einer Brennkammer einer Turbomaschine geliefert werden soll, repräsentativ ist, wobei die Position des Schiebers (2A) der Dosiervorrichtung anhand des Sollsignals bestimmt wird, wobei das Verfahren umfasst:

- einen Schritt zum Erhalten eines ersten Signals (S1), das für einen durch einen Durchflussmesser (6) gelieferten Messwert einer in die Brennkammer eingespritzten Treibstoffmenge repräsentativ ist,
- einen Schritt zur Auswertung eines zweiten Signals (S2), das für die in die Brennkammer eingespritzte Treibstoffmenge repräsentativ ist, anhand einer Messung (M) der Position des Schiebers (2A) der Dosiervorrichtung (2),
- einen Schritt zur Bewertung eines dritten Signals (S3), das für den durch den Durchflussmesser (6) gelieferten Messwert repräsentativ ist, durch Anwenden eines digitalen Modells (8B) des Durchflussmessers auf das zweite Signal (S2), und
- einen Schritt zur Erstellung des Sollsignals (C1), indem zu dem ersten Signal (S1) ein Kompensationssignal (S4) hinzugefügt wird, wobei dieses Kompensationssignal durch Subtraktion des dritten Signals vom zweiten Signal erhalten wird.

2. Verfahren zur Erstellung eines Sollsignals nach Anspruch 1, bei dem:

- das erste Signal (S1) Rechteckimpulse aufweist und durch ein digitales Tiefpassfilter (8A) gefiltert wird, welches geeignet ist, diese Rechteckimpulse zu glätten, bevor es zu dem Kompensationssignal (S4) hinzugefügt wird, und
- das dritte Signal (S3) durch das digitale Tiefpassfilter (8C) gefiltert wird, bevor es von dem zweiten Signal subtrahiert wird, um das Kompensationssignal (S4) zu bilden.

**3.** Verfahren zur Lieferung eines Sollsignals (C) an eine Treibstoffdosiervorrichtung (2) mit Schieber einer Turbomaschine, wobei die Position des Schiebers (2A) der Dosiervorrichtung anhand des Sollsignals bestimmt wird, wobei das Verfahren umfasst:

- einen Schritt zur Erstellung eines ersten Sollsignals (C1) unter Verwendung des Erstellungsverfahrens nach Anspruch 1 oder 2,
- wenn dieses erste Sollsignal (C1) größer als ein vorbestimmter Schwellwert (THR) ist, einen Schritt zur Lieferung des ersten Sollsignals (C1) an die Treibstoffdosiervorrichtung (2),
- andernfalls einen Schritt zur Lieferung eines zweiten Sollsignals, das aus wenigstens dem zweiten Signal (S2) erhalten wird, an die Treibstoffdosiervorrichtung (2).

**4.** Lieferungsverfahren nach Anspruch 3, bei dem dann, wenn das erste Sollsignal (C1) kleiner als der vorbestimmte Schwellwert (THR) ist, das an die Treibstoffdosiervorrichtung gelieferte zweiten Sollsignal aus einer Kombination zwischen dem zweiten Signal (S2) und dem ersten Sollsignal (C1) resultiert.

**5.** Vorrichtung zur Erstellung (8) eines Sollsignals, das für eine Treibstoffmenge, die über eine Treibstoffdosiervorrichtung (2) mit Schieber an ein Treibstoffeinspritzsystem (4) einer Brennkammer einer Turbomaschine geliefert werden soll, repräsentativ ist, wobei die Position des Schiebers (2A) der Dosiervorrichtung anhand des Sollsignals (C) bestimmt wird, wobei die Vorrichtung umfasst:

- Mittel zum Erhalten eines ersten Signals (S1), das für einen durch einen Durchflussmesser gelieferten Messwert einer in die Brennkammer eingespritzten Treibstoffmenge repräsentativ ist,
- Mittel zur Auswertung (5, 7) eines zweiten Signals (S2), das für die in die Brennkammer eingespritzte Treibstoffmenge repräsentativ ist, anhand einer Messung (M) der Position des Schiebers (2A) der Dosiervorrichtung,
- Mittel zur Bewertung eines dritten Signals (S3), das für den durch den Durchflussmesser gelieferten Messwert repräsentativ ist, durch Anwenden eines digitalen Modells (8B) des Durchflussmessers auf das zweite Signal (S2), und
- Mittel zur Erstellung (8E) des Sollsignals (C1), indem zu dem ersten Signal (S1) ein Kompensationssignal (S4) hinzugefügt wird, wobei dieses Kompensationssignal durch Subtraktion des dritten Signals (S3) vom zweiten Signal (S2) erhalten wird.

**6.** Vorrichtung zur Erstellung (8) eines Sollsignals nach Anspruch 5, bei der das erste Signal (S1) Rechteckimpulse aufweist, wobei die Erstellungsvorrichtung ferner ein erstes digitales Tiefpassfilter (8A), das geeignet ist, die Rechteckimpulse des ersten Signals zu glätten, und ein dem ersten Filter ähnliches zweites digitales Filter (8C) umfasst, wobei das erste Signal durch das erste Filter gefiltert wird, bevor es zu dem Kompensationssignal hinzugefügt wird, und wobei das dritte Signal durch das zweite Filter gefiltert wird, bevor es von dem zweiten Signal subtrahiert wird, um das Kompensationssignal zu bilden.

**7.** System zur Lieferung (1) eines Sollsignals an eine Treibstoffdosiervorrichtung (2) mit Schieber einer Turbomaschine, wobei die Position des Schiebers (2A) der Dosiervorrichtung anhand des Sollsignals bestimmt wird, wobei das System umfasst:

- eine Vorrichtung zur Erstellung (8) eines ersten Sollsignals (C1) gemäß Anspruch 5 oder 6,
- Mittel zum Vergleichen (9) des ersten Sollsignals mit einem vorbestimmten Schwellwert (THR),
- Mittel zur Lieferung an die Treibstoffdosiervorrichtung:

  ∘ des ersten Sollsignals (C1), wenn dieses größer als der vorbestimmte Schwellwert ist,
  ∘ eines zweiten Sollsignals, das aus wenigstens dem zweiten Signal (S2) erhalten wird.

**8.** Turbomaschine, die ein System zur Lieferung (1) eines Sollsignals an eine Treibstoffdosiervorrichtung mit Schieber nach Anspruch 7 umfasst.

**Claims**

**1.** A production method for producing a setpoint signal (C1) representative of a flow rate of fuel that a fuel metering device (2) having a slide valve is to supply to a system (4) for injecting fuel into a combustion chamber of a turbine engine, the position of the valve (2A) of the metering device being determined on the basis of the setpoint signal and said method comprising:

· a step of obtaining a first signal (S1) representative of a measurement as delivered by a flow meter (6) of a flow rate of fuel injected into the combustion chamber;

· a step of evaluating a second signal (S2) representative of the flow rate of fuel injected into the combustion chamber on the basis of a measurement (M) of the position of the valve (2A) of the metering device (2);

· a step of estimating a third signal (S3) representative of the measurement delivered by the flow meter (6) by applying a digital model (8B) of the flow meter to the second signal (S2); and

· a step of producing the setpoint signal (C1) by adding a compensation signal (S4) to the first signal (S1), the compensation signal being obtained by subtracting the third signal from the second signal.

2. A production method for producing a setpoint signal according to claim 1, wherein:

· the first signal (S1) is in the form of steps and is filtered by a lowpass digital filter (8A) suitable for smoothing the steps prior to being added to the compensation signal (S4); and

· the third signal (S3) is filtered by the lowpass digital filter (8C) before being subtracted from the second signal in order to form the compensation signal (S4).

3. A supply method for supplying a setpoint signal (C) to a fuel metering device (2) having a slide valve in a turbine engine, the position of the valve (2A) of the metering device being determined from the setpoint signal, said method comprising:

· a step of producing a first setpoint signal (C1) by using the production method according to claim 1 or claim 2;

· if the first setpoint signal (C1) is greater than a predetermined threshold (THR), a step of supplying the first setpoint signal (C1) to the fuel metering device (2);

· else, a step of supplying the fuel metering device (2) with a second setpoint signal obtained at least from the second signal (S2).

4. A supply method according to claim 3, wherein, when the first setpoint signal (C1) is less than the predetermined threshold (THR), the second setpoint signal supplied to the fuel metering device results from a combination between the second signal (S2) and the first setpoint signal (C1).

5. A production device (8) for producing a setpoint signal representative of a fuel flow rate that a fuel metering device (2) having a slide valve is to supply to a fuel injection system (4) of a combustion chamber in a turbine engine, the position of the valve (2A) of the metering device being determined from the setpoint signal (C), said device comprising:

· means for obtaining a first signal (S1) representative of a measurement as delivered by a flow meter of a fuel flow rate injected into the combustion chamber;

· means (5, 7) for evaluating a second signal (S2) representative of the flow rate of fuel injected into the combustion chamber on the basis of a measurement (M) of the position of the valve (2A) of the metering device;

· means for estimating a third signal (S3) representative of the measurement delivered by the flow meter by applying a digital model (8B) of the flow meter to the second signal (S2); and

· means (8E) for producing the setpoint signal (C1) by adding a compensation signal (S4) to the first signal (S1), the compensation signal being obtained by subtracting the third signal (S3) from the second signal (S2).

6. A production device (8) according to claim 5, wherein the first signal (S1) presents steps, said production device further comprising a first lowpass digital filter (8A) suitable for smoothing the steps of the first signal and a second digital filter (8C) similar to the first filter, the first signal being filtered by the first filter before being added to the compensation signal, and the third signal being filtered by the second filter before being subtracted from the second signal to form the compensation signal.

7. A supply system (1) for supplying a setpoint signal to a fuel metering device (2) having a slide valve in a turbine engine, the position of the valve (2A) of the metering device being determined from the setpoint signal, said system comprising:

· a production device (8) for producing a first setpoint signal (C1) according to claim 5 or claim 6;

· comparator means (9) for comparing the first setpoint signal with a predetermined threshold (THR); and

· means for supplying the fuel metering device with:

· the first setpoint signal (C1) if it is greater than the predetermined threshold; or

· a second setpoint signal obtained from at least the second signal (S2).

8. A turbine engine including a system (1) according to claim 7 for supplying a setpoint signal to a fuel metering device having a valve.

FIG.1

FIG.2

FIG.3

**EP 2 558 700 B1**

## RÉFÉRENCES CITÉES DANS LA DESCRIPTION

**Documents brevets cités dans la description**

- US 5305597 A

- EP 1150795 A